# FASCICULE DE BREVET EUROPEEN

(11) **EP 0 351 290 B1**
(45) Date de publication et mention de la délivrance du brevet: **31.03.1993**
(21) Numéro de dépôt: 89401940.5
(22) Date de dépôt: 06.07.1989
(51) Int. Cl.: B65B 9/04, B65B 41/14, B65H 20/22

(54) **Machine de conditionnement en continu de produits en particulier alimentaires ou pharmaceutiques, dans des récipients en matière plastique**
Maschine zum kontinuierlichen Konditionieren von Produkten, insbesondere von Nahrungsmitteln oder pharmazeutischen Produkten in Kunststoffbehältern
Machine for the continuous packing of products, in particular foodstuffs or pharmaceutical products, in plastic containers

(30) Priorité: 13.07.1988 FR 8809533
(43) Date de publication de la demande: 17.01.1990
(73) Titulaire: A.R.C.I.L., F-78400 Chatou (FR)
(72) Inventeur: Vicq, Jean-Marie, F-75005 Paris (FR)
(74) Mandataire: Ramey, Daniel

(56) Documents cités:
- FR-A- 2 429 089

## Description

L'invention concerne une machine de conditionnement en continu de produits, en particulier alimentaires ou pharmaceutiques dans des récipients en matière plastique qui sont fermés de façon étanche après remplissage.

On connaît déjà des machines de ce type, dans lesquelles les récipients sont réalisés par thermoformage d'un film de matière plastique, reçoivent une ou des doses de produits, sont fermés par soudure ou collage sur leur face supérieure d'un film de matière telle que de l'aluminium, un papier métallise, ou une matière plastique, puis passent dans un poste de découpe pour être séparés les uns des autres ou être groupés par quatre, six, huit ou douze par exemple.

L'inconvénient essentiel de ces machines connues est leur manque d'adaptabilité à un changement de format des récipients. On comprend que, lorsque le film de matière plastique dans lequel sont thermoformés les récipients, est déplacé d'une extrémité à l'autre de la machine, les outillages et/ou accessoires des divers postes de thermoformage, dosage, fermeture, découpe doivent être commandés en synchronisme parfait par rapport aux mouvements du film plastique, et doivent être positionnés exactement par rapport aux récipients formés dans le film. Pour cette raison, les machines connues sont généralement équipées d'un arbre longitudinal de transmission, les divers postes sont positionnés de façon très précise et montés à demeure sur le châssis de la machine, et la synchronisation des outillages avec le défilement du film de matière plastique est réalisée initialement en usine, lors de la construction de la machine. Il en résulte que, lorsqu'il faut modifier la machine en raison par exemple d'un changement de format des récipients ou des groupes de récipients, il ne suffit pas de changer certains outillages ou accessoires tels que les moules de thermoformage, le nombre et l'emplacement des buses de dosage de produits, le nombre et l'emplacement des moyens de soudure des opercules, et les lames de découpe, il est encore nécessaire de repositionner les divers postes et de resynchroniser l'ensemble de la machine, ce qui correspond en fait à une reconstruction quasi-complète de la machine. Cela ne peut être fait qu'en usine, par du personnel spécialisé, et ces opérations de modification sont extrêmement longues et coûteuses.

On connait, par le document FR-A-2 429 089, une machine du type précité comprenant des postes de thermoformage des récipients, de dosage des produits, de fermeture des récipients et de découpe, et dans laquelle un film de matière plastique est déplacé d'une extrémité à l'autre de la machine par deux chaînes sans fin parallèles munies de picots ou de dents qui pénétrent dans les bords du film, ces chaînes étant guidées dans des glissières et passant sur des roues dentées de renvoi aux extrémités de la machine, et étant déplacées sur des distances prédéterminées par un dispositif d'entraînement linéaire agissant sur les chaînes par l'intermédiaire de roues dentées et d'organes mobiles de préhension et de serrage des chaînes.

Ce dispositif connu permet de déterminer le pas d'avance des chaînes d'une façon indépendante de l'allongement des chaînes, mais qui reste tributaire de l'engagement des chaînes sur des roues dentées et donc des tolérances de fabrication des maillons des chaînes et des dents des roues dentées en prise avec les chaînes.

L'invention a essentiellement pour objet une machine du type précité, mais qui soit "flexible" et adaptable simplement et rapidement, sur site, à des modifications telles que des changements de format des récipients ou des groupes de récipients, etc...

L'invention a également pour objet une machine du type précité, qui soit plus fiable et plus précise que celles de la technique antérieure.

L'invention propose donc une machine de conditionnement en continu de produits, en particulier alimentaires ou pharmaceutiques, dans des récipients en matière plastique, comprenant un châssis comportant un poste de thermoformage des récipients, un poste de dosage de produits dans les récipients, un poste de fermeture des récipients et un poste de découpe, ainsi que des moyens de prise et de déplacement d'un film de matière plastique comprenant deux chaînes sans fin parallèles munies de picots ou de dents de pénétration dans les bords du film, des glissières de guidage de ces chaînes et des moyens d'entraînement des chaînes pas à pas sans glissement, caractérisée en ce que les moyens d'entraînement des chaînes comprennent des roues motrices à gorge lisse de réception des chaînes, un moteur pilote d'entraînement des roues en rotation, et pour chaque roue motrice, au moins une roue libre à pignon, disposée à la périphérie de la roue motrice et reliée à celle-ci par un bras radial tournant et un embrayage, pour engager la chaîne sur la roue motrice au moyen du pignon et la déplacer en synchronisme avec la roue motrice sur une distance angulaire prédéterminée, des moyens de rappel étant prévus pour ramener la roue libre dans une position initiale après chaque déplacement de chaîne sur un pas d'avance.

On obtient ainsi un déplacement très précis du film d'un poste à l'autre, ce qui est essentiel pour la bonne marche des opérations, et une synchronisation parfaite du déplacement des deux chaînes.

Le déplacement des chaînes est de plus rendu indépendant des tolérances de fabrication des maillons des chaînes et des dents des pignons qui sont en prise avec les chaînes. Selon une autre caractéristique de l'invention, les postes précités sont montés déplaçables en translation longitudinale sur le châssis et des moyens sont prévus pour adapter rapidement la machine à un changement de format des récipients ou des groupes de récipients, ces moyens comprenant, outre des moyens de déplacement des divers postes les uns par rapport aux autres, des moyens de réglage du mouvement des chaînes de prise et de déplacement du film de matière plastique, et des moyens de synchronisation automatique des outillages équipant les postes en fonction du mouvement des chaînes de prise et de déplacement du film de matière plastique.

Comme les divers postes sont montés déplaçables en translation longitudinale sur le châssis de la machine selon l'invention, il est simple et rapide de les positionner les uns par rapport aux autres en fonction d'un nouveau format de récipient ou de groupes de récipients. Il suffit ensuite de regler la commande des chaînes de prise et de déplacement du film de matière plastique pour obtenir automatiquement un synchronisme des outillages et accessoires prevus aux divers postes de la machine.

Selon une autre caractéristique de l'invention, les postes de la machine comprennent des moteurs indépendants, associés à des roues codeuses, et des moyens de comptage et de traitement sont prévus pour lire les signaux de sortie des roues codeuses et déterminer les commandes des moteurs des divers postes en fonction du signal de sortie d'une roue codeuse associée au moteur pilote précité.

On obtient ainsi une synchronisation parfaite du mouvement des outillages des divers postes et du mouvement des chaînes de prise et de déplacement du film de matière plastique.

Selon une autre caractéristique de l'invention, la machine comprend également des moyens de réglage du positionnement transversal des chaînes de prise et de déplacement du film de matière plastique, pour adaptation à une modification de la largeur de ce film.

On peut ainsi passer d'une largeur de film à une autre, par simple réglage du positionnement transversal des chaînes de prise et de déplacement de film.

L'invention sera mieux comprise et d'autres détails, caractéristiques et avantages de celle-ci apparaîtront plus clairement à la lecture de la description qui suit, faite à titre d'exemple en réference aux dessins annexés, dans lesquels :
- la figure 1 est une vue schématique en élévation d'une machine selon l'invention ;
- la figure 2 est une vue de dessus de cette machine ;
- la figure 3 est une vue schématique, en coupe transversale verticale, d'un moyen de support et de guidage d'une chaîne de déplacement d'un film plastique ;
- la figure 4 est une vue de dessus de ce moyen ;
- la figure 5 est une vue schématique en coupe transversale verticale d'une partie des moyens d'entraînement de chaîne ;
- la figure 6 est une vue schématique en coupe transversale verticale d'une roue motrice d'entraînement de chaîne ;
- la figure 7 est une vue de dessus du système représenté en figure 6.

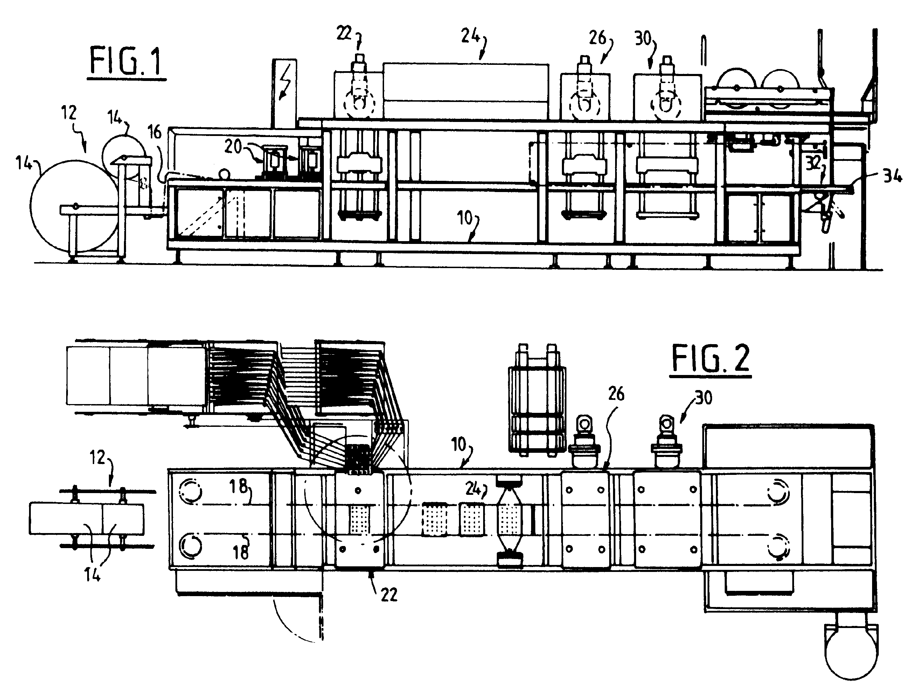

Les figures 1 et 2 sont des vues d'ensemble d'une machine selon l'invention.

Cette machine comprend, sur toute sa longueur, un châssis 10 à une extrémité duquel se trouve un poste 12 de support et de déroulement de bobines 14 d'un film de matière plastique dans lequel seront thermoformés les récipients. Le transfert d'une bobine 14 de sa position d'attente à sa position de déroulement peut être motorisé, ainsi d'ailleurs que la rotation de la bobine 14 autour de son axe dans sa position de déroulement.

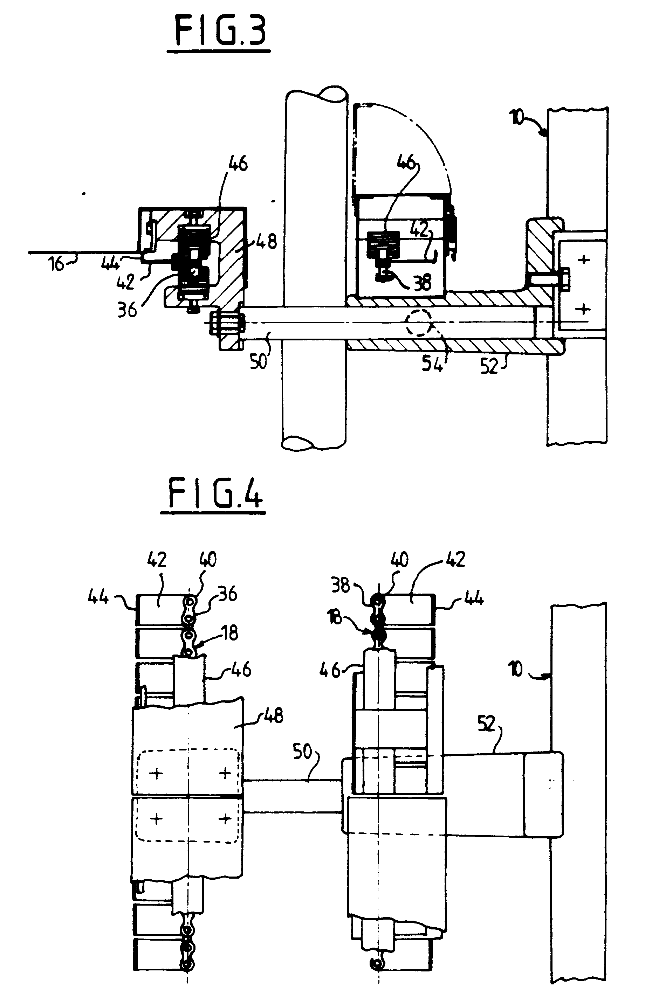

Le film 16 de matière plastique déroulé d'une bobine 14 forme une boucle de réserve à l'entrée du châssis 10, puis est saisi et déplacé vers l'autre extrémité du châssis par des chaînes sans fin parallèles 18, représentées plus en détail dans les figures 3 et 4, pour passer successivement par des postes de chauffe 20, un poste 22 de positionnement de décor et de thermoformage, un poste 24 de dosage de produits et de remplissage des récipients, un poste 26 de fermeture étanche des récipients, et un poste 30 de découpe des récipients ou de groupes de récipients. Un convoyeur à bandes 32 est prévu en sortie de machine pour évacuer les récipients ou groupes de récipients, et comprend une partie basculante 34 pour l'élimination des récipients mal remplis ou non remplis, commandée par des moyens de détection prévus au poste de dosage des produits. Les divers postes 20, 22, 24,26, 30 de la machine sont montés déplaçables en translation longitudinale sur le châssis 10 de façon à permettre une adaptation aisée à des changements de format des récipients ou des groupes de récipients.

On a représenté dans les figures 3 et 4, les moyens de support et de guidage des chaînes 18 de prise et de déplacement du film 16 de matière plastique.

Les chaînes 18 sont des chaînes sans fin formant une boucle dans un plan horizontal, comprenant un brin 36 d'avance du film de matière plastique et un brin 38 de retour. Chaque chaîne est formée de maillons horizontaux 40 à axes verticaux sur lesquels sont montées des plaques médianes horizontales 42 dont un bord extérieur relevé 44 comprend des dents ou pointes destinées à pénétrer dans un bord longitudinal du film 16 de matière plastique. Pour éviter que cette pénétration des dents des chaînes 18 dans le film de matière plastique provoque la déchirure de petits morceaux de plastique, qui pourraient être une cause de pollution des produits dont sont remplis les récipients, il est prévu de chauffer les bords du film plastique 16 pour les ramollir, avant prise par les dents des chaînes 18.

Les maillons 40 des chaînes sont reçus dans des glissières longitudinales 46, comprenant des garnitures en matière plastique à très faible coefficient de frottement, et ces glissières sont elles-mêmes portées par des pièces 38 montées en bout de tiges transversales horizontales 50 guidées dans des manchons 52 fixés sur le châssis 10, et immobilisées en position dans ces manchons au moyen de vis de blocage 54.

On comprend que, si l'on veut régler la distance entre les brins 36 des deux chaînes 18, pour adaptation à une nouvelle largeur de film de matière plastique, il suffit de débloquer les vis 54, de faire coulisser les tiges 50 dans les fourreaux 52, et de resserrer les vis 54. Des postes de lavage et de graissage automatique des chaînes peuvent être prévus sur les trajets des brins de retour 38.

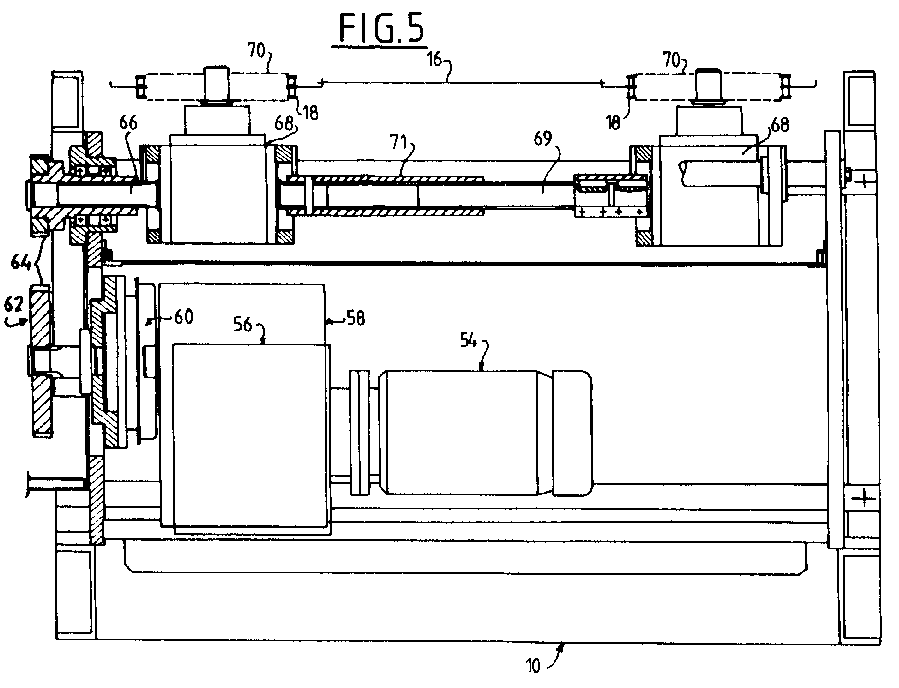

On va maintenant décrire, en référence aux figures 5, 6 et 7, les moyens d'entraînement des chaînes 18 de prise et de déplacement du film de matière plastique.

Ces moyens comprennent (figure 5) un moteur électrique 54 porté sur le châssis 10 et dont la sortie est reliée par un réducteur 56, un indexeur 58 et un limiteur de couple 60 à un train d'engrenage 62 dont deux roues dentées 64 sont représentées en figure 5, une de ces roues dentées étant montée sur la sortie du limiteur de couple 60, l'autre étant montée sur l'extrémité d'un arbre horizontal transversal 66 menant à deux boîtes 68 à renvoi d'angle sur les arbres de sortie desquelles sont montées deux roues motrices 70 d'axe vertical pour l'entraînement des chaînes 18.

Les deux roues dentées 64 du train d'engrenage 62 sont en prise avec une roue dentée intermédiaire non représentée. Les boîtes 68 de renvoi d'angle sont reliées entre elles par une transmission à longueur réglable, comprenant un tronçon d'arbre cannelé 69, guidé en translation dans un manchon transversal horizontal 71 cannelé intérieurement, ce qui permet de rapprocher ou d'écarter l'une de l'autre les deux roues motrices 70 en fonction de la largeur du film 16 de matière plastique.

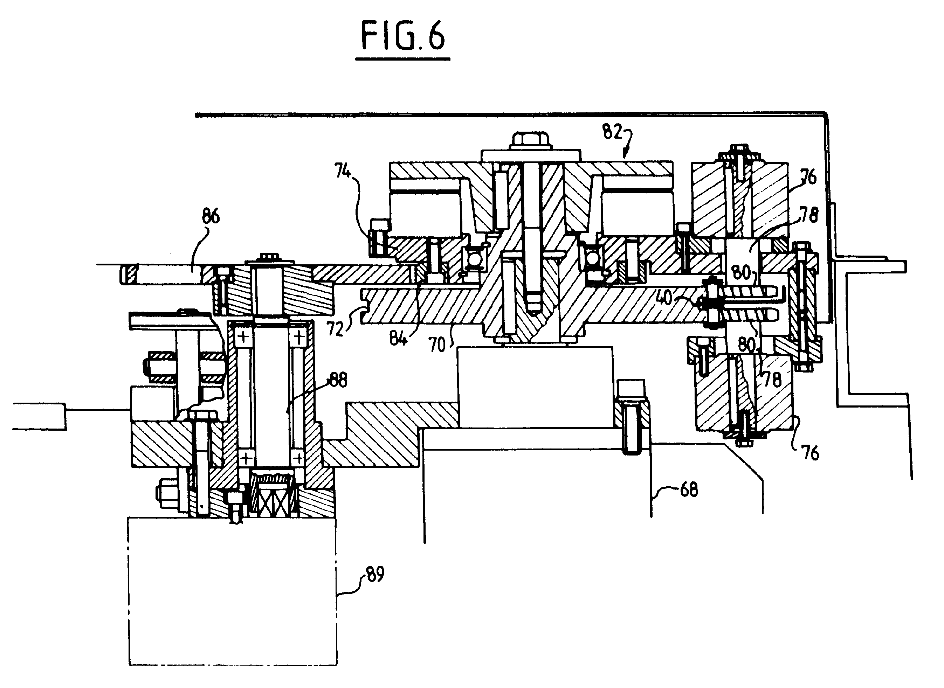

Pour assurer un entraînement précis et synchrone des deux chaînes 18, les roues motrices 70 ne sont pas des roues dentées, mais sont à surface périphérique lisse comprenant une gorge annulaire 72 de réception de la partie médiane des maillons 40 des chaînes 18 (figure 6). Chaque roue motrice 70 est associée à un bras radial 74 monté à rotation autour de l'axe de la roue 70 et portant deux mécanismes de roue libre 76, alignés et placés de part et d'autre de la roue motrice 70, et comprenant chacun un arbre vertical 78 sur lequel est monté un pignon 80 en prise avec les maillons 40 de la chaîne 18 appliquée sur la périphérie de la roue 70.

Un embrayage électromagnétique 82 permet de solidariser et de désolidariser à volonté la roue motrice 70 et le bras radial 74.

Par ailleurs, le bras radial 74 est solidaire d'un pignon 84 coaxial à la roue motrice 70, qui est en prise avec un pignon 86 monté sur l'arbre de sortie 88 d'un vérin rotatif 89, formant le moyen de retour du bras radial 74 et de ses roues libres 76 dans une position angulaire initiale par rapport à l'axe de la roue motrice 70.

Ce système d'entraînement fonctionne de la façon suivante.

Le mouvement de rotation continue obtenu en sortie de l'ensemble moteur 54-réducteur 56 est transformé en mouvement de rotation pas à pas par l'indexeur 58, de façon classique. Le rapport de transmission entre la sortie de l'indexeur 58 et l'arbre 66 d'entraînement des roues motrices 70 par l'intermédiaire des boîtes de renvoi 68 est déterminé par le train d'engrenage 62, dont les roues dentées sont amovibles et facilement accessibles, pour une modification éventuelle de ce rapport de transmission.

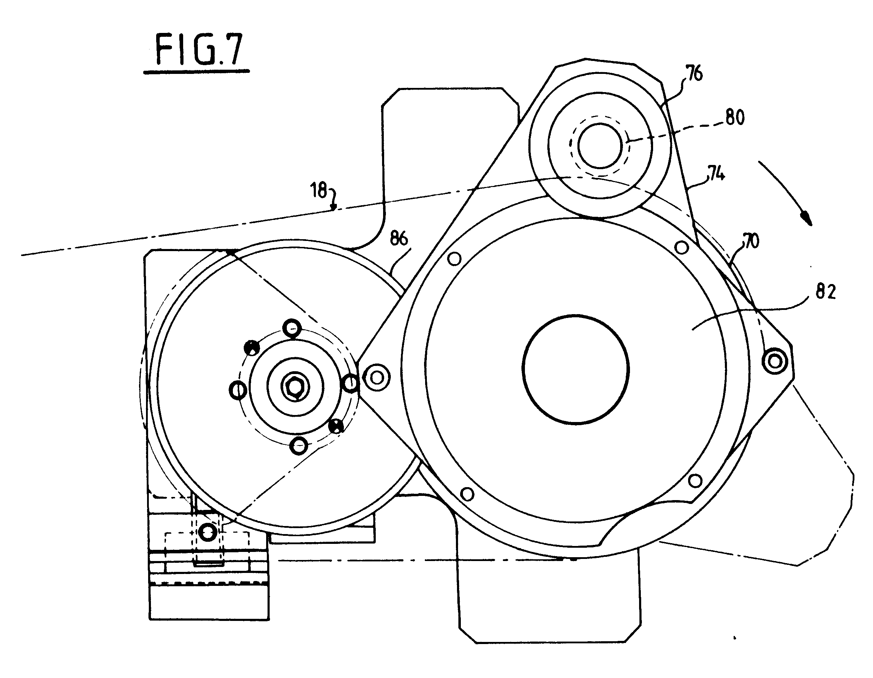

Le mouvement de rotation pas à pas des roues 70 est transmis aux chaînes 18 de la façon suivante : à chaque arrêt d'une roue motrice 70, l'embrayage électromagnétique 82 est désexcité, pour désolidariser le bras radial 74 et la roue 70, et le vérin pneumatique 89 est alimenté en air comprimé, pour faire tourner le bras radial 74 autour de l'axe de la roue 70 par l'intermédiaire des pignons 86 et 84, et ramener le bras radial et ses roues libres 76 dans une position angulaire initiale représentée en trait plein en figure 7. Pendant ce mouvement de retour, les roues libres 76 permettent aux pignons 80 engrenant avec les maillons de la chaîne 18 de tourner librement, de sorte que cette rotation du bras radial 74 n'a aucun effet sur la chaîne 18 qui reste immobile.

Lorsque la roue motrice 70 recommence à tourner, le vérin pneumatique 89 est mis à l'échappement, l'embrayage électromagnétique 82 est excité et le bras radial 74 est solidarise avec la roue 70 pour être entraîné en rotation dans le sens indiqué par les flèches en figure 7. Pendant cette rotation, les mécanismes de roue libre 76 interdisent toute rotation des pignons 80 en prise avec les maillons de la chaîne 18, de sorte que celle-ci est immobilisée par rapport à la périphérie de la roue motrice 70 et est donc entraînée par cette roue motrice.

Lorsque la roue 70 a tourné d'une distance angulaire prédéterminée, l'embrayage 82 est désexcité, le vérin 89 est alimenté, et le bras 74 est ramené dans sa position angulaire initiale représentée en traits pleins.

Ce mode d'entraînement des roues dentées est extrêmement précis, car il ne dépend pas de la pénétration des dents d'une roue dans les maillons d'une chaîne et donc des tolérances de fabrication de la roue dentée et des maillons de la chaîne. Les mécanismes à roue libre 76 et leurs pignons 80 interdisent tout déplacemnet relatif de la chaîne par rapport à la périphérie de la roue motrice 70 pendant la rotation de celle-ci.

Si on le souhaite, et pour empêcher tout glissement de la chaîne sur la roue motrice 70 à l'arrêt de celle-ci, on peut prévoir un mécanisme supplémentaire de roue libre et de pignon en prise avec la chaîne sur une partie de la périphérie de la roue 70, la roue libre permettant la rotation libre du pignon associé pendant la rotation de la roue motrice 70, et interdisant toute rotation du pignon associé dans le sens contraire.

L'arbre de sortie de l'indexeur 58 est équipé d'un système de roue codeuse, permettant de détecter sa rotation avec une très grande précision et délivrant par exemple 4.000 impulsions par tour. La rotation de l'arbre de sortie de l'indexeur 58 est utilisée comme signal de base pour la synchronisation des moteurs équipant les divers postes de la machine. Les arbres de sortie de ces moteurs ou des indexeurs associés sont également équipés de roues codeuses, ayant la même précision que celle de l'indexeur 58. Un système de traitement est relié par des compteurs aux diverses roues codeuses et produit des signaux de commande ou de réglage des moteurs des postes de la machine, permettant de les synchroniser sur les moyens d'entraînement des chaînes 18.

## Revendications

1. Machine de conditionnement en continu de produits, en particulier alimentaires ou pharmaceutiques, dans des récipients de matière plastique, comprenant un châssis (10) comportant un poste (22) de thermoformage des récipients, un poste (24) de dosage de produits dans les récipients, un poste (26) de fermeture des récipients et un poste (30) de découpe, ainsi que des moyens de prise et de déplacement d'un film (16) de matière plastique, comprenant deux chaînes sans fin parallèles (18), munies de picots ou de dents (44) de pénétration dans les bords du film (16), des glissières (48) de guidage de ces chaînes et des moyens d'entraînement des chaînes pas à pas sans glissement, caractérisée en ce que les moyens d'entrainement des chaînes comprennent des roues motrices (70) à gorge lisse (72) de réception des chaînes (18), un moteur pilote (54) d'entrainement des roues (70) en rotation et, pour chaque roue motrice, au moins une roue libre (76) à pignon (80) qui est disposée à la périphérie de la roue motrice et reliée à celle-ci par un bras radial tournant (74) et un embrayage (82), pour engager la chaîne (18) sur la roue motrice au moyen du pignon (80) et la déplacer en synchronisme avec la roue motrice sur une distance angulaire prédéterminée, des moyens de rappel (84, 86, 88, 89) étant prévus pour ramener la roue libre (76) dans une position initiale après chaque déplacement de chaîne sur un pas d'avance.

2. Machine selon la revendication 1, caractérisée en ce que le bras radial tournant (74) porte deux roues libres (76) alignées l'une avec l'autre et disposées de part et d'autre de la roue motrice (70) pour engager par leurs pignons (80) le même maillon de la chaîne (18).

3. Machine selon la revendication 1 ou 2, caractérisée en ce que les moyens de rappel comprennent un vérin rotatif (89) reliéé par des engrenages (86, 84) au bras radial tournant (74).

4. Machine selon une des revendications 1 à 3, caractérisée en ce qu'elle comprend des moyens (50, 52, 54) de réglage du positionnement transversal des chaînes (18) de prise et de déplacement du film de matière plastique, pour adaptation à une modification de la largeur de ce film.

5. Machine selon une des revendications 1 à 4, caractérisée en ce que les roues motrices (70) sont entraînées en rotation par des boîtes à renvoi d'angle (68) reliées entre elles par une transmission à longueur réglable, pour adaptation à une modification de la largeur du film de matière plastique.

6. Machine selon une des revendications 1 à 5, caractérisée en ce que les postes précités sont montés déplaçables en translation longitudinale sur le châssis (10) et en ce que des moyens sont prévus pour adapter rapidement la machine à un changement de format des récipients ou des groupes de récipients, ces moyens comprenant, outre des moyens de déplacement des divers postes les uns par rapport aux autres, des moyens (58, 62) de réglage des mouvements des chaînes (18 de prise et de déplacement du film de matière plastique, et des moyens de synchronisation automatique des outillages équipant les postes en fonction du mouvement des chaînes de prise et de déplacement du film de matière plastique.

## Patentansprüche

1. Maschine zum kontinuierlichen Verpacken von Produkten insbesondere von Nahrungsmitteln oder pharmazeutischen Produkten in Kunststoffbehälter, die ein Gehäuse (10) aufweist, welches eine Station (22) zum Warmverformen der Behälter, eine Station (24) zur Dosierung der Produkte in die Behälter, eine Station (26) zum Verschließen und eine Station (30) zum beschneiden sowie Mittel zum Nehmen und Verschieben eines Kunststoffilms (16) enthält die zwei parallele Endlosketten (18), die mit Spitzen oder Zähnen (44) zum Durchdringen der Ränder des Films (16) versehen sind und Gleitführungen (48) zum Führen dieser ketten sowie Mittel aufweisen, um die ketten Schritt für Schritt anzutreiben, ohne daß diese gleiten, dadurch gekennzeichnet, daß die Mittel zum Antreiben der ketten Antriebsräder (70) mit glatter Rille (72) zur Aufnahme der ketten (18), einen Steuermotor (54) zum Antreiben der Räder (70) und für jedes Antriebsrad zumindest ein freies Rad (76) mit einem Ritzel (80) aufweisen, das am Umfang des Antriebsrades angeordnet ist und mittels eines sich drehenden radialen Armes (74) und einer Kupplung (82) mit diesem verbunden ist, um die kette mittels des Ritzels (80) mit dem Antriebsrad in Eingriff zu bringen und sie synchron mit dem Antriebsrad um einen vorbestimmten Winkelabstand zu verschieben, wobei Rückstellmittel (84, 86, 88, 89) vorgesehen sind, um das freie Rad (76) nach jeder Verschiebung der kette um einen Schritt nach vorne in eine ursprüngliche Position zurückzubringen.

2. Maschine nach Anspruch 1, dadurch gekennzeichnet, daß die sich drehenden radialen Arme (74) mit zwei freien Rädern (76) versehen sind, die zueinander ausgerichtet und zu beiden Seiten des Antriebsrades (70) angeordnet sind, um mit ihren Ritzeln (80) in dasselbe Glied der kette (18) einzugreifen.

3. Maschine nach Anspruch 1 oder 2, dadurch gekennzeichnet, daß die Rückstellmittel ein sich drehendes Stellglied (89) aufweisen, das mittels Zahnräder (86, 84) mit dem sich drehenden radialen Arm verbunden ist.

4. Maschine nach einem der Ansprüche 1 bis 3, dadurch gekennzeichnet, daß sie zur Anpassung an eine Veränderung der Breite des Kunststoffilms Mittel (50, 52, 54) zum Einstellen der seitlichen Position der ketten (18) zum Nehmen und Verschieben dieses Films aufweist.

5. Maschine nach einem der Ansprüche 1 bis 4, dadurch gekennzeichnet, daß die Antriebsräder (70) über Winkelstellgetriebe (68) angetrieben werden, die zur Anpassung an eine Veränderung der Breite des Kunststoffilms untereinander mittels einer Übersetzung mit einstellbarer Länge verbunden sind.

6. Maschine nach einem der Ansprüche 1 bis 5, dadurch gekennzeichnet, daß die obengenannten Stationen in Längsrichtung verschieblich an dem Gehäuse (10) angebracht sind und daß Mittel zur schnellen Anpassung an eine Veränderung des Formates der Behälter oder der Gruppen von Behältern vorgesehen sind, wobei diese Mittel andere Mittel zum Verschieben diverser Stationen gegeneinander, Mittel (58, 62) zum Steuern von Bewegungen der Ketten (18) zum Nehmen und Verschieben des Kunststoffilms und Mittel zur automatischen Synchronisation der Ausstattung aufweisen, mit welcher die Station, abhängig von der Bewegung der Ketten zum Nehmen und Verschieben des Kunststoffilms versehen sind.

## Claims

1. A machine for continuously packing, in particular, food or pharmaceutical products in plastic material containers, including a frame (10) comprising a station (22) for thermoforming the containers, a station (24) for introducing predetermined amounts of products into the containers, a station (26) for sealing the containers, a cutting station (30) and means for taking up and displacing a plastic material film (16), said take-up and displacement means comprising two parallel endless chains (18) having teeth or barbs (44) penetrating into the edges of the film (16), slides (48) for guiding these chains and means for driving the chains step by step without slipping, the machine being characterized in that the chain driving means comprise drive wheels (70) having a smooth groove (72) receiving the chains, a pilot motor (54) for rotating the drive wheels (70) and, for each drive wheel, at least one pinion free wheel (76), disposed at the periphery of the drive wheel and connected thereto by a rotating radial arm (74) and a clutch (82) for engaging the chain (18) on the drive wheel by means of said pinion (80) and moving it in synchronism with the drive wheel over a predetermined angular distance, return means (84,86,88,89) being provided for returning the free wheel (76) to an initial position after each chain movement over one advancing step.

2. The machine as claimed in claim 1, characterized in that the rotating radial arm (74) has two free wheels (76) aligned with each other and disposed on each side of the drive wheel (70) for engaging the same link of the chain (18) by their pinion (80).

3. The machine as claimed in claim 1 or 2, characterized in that said return means comprise a rotary jack (89) connected by gears (86,84) to said rotating radial arm (74).

4. The machine as claimed in one of claims 1 to 3, characterized in that it comprises means (50,52,54) for adjusting the transverse positioning of the plastic material film take-up and displacement chains (18), for adapting them to a modification of the width of this film.

5. The machine as claimed in one of claims 1 to 4, characterized in that said drive wheels (70) are driven in rotation by change of direction boxes (68) connected together by an adjustable length transmission, for adaptation to a modification of the width of the plastic material film.

6. The machine as claimed in one of claims 1 to 5, characterized in that said stations are mounted for longitudinal translational movement along the frame (10) and means are provided for rapidly adapting the machine to a change of format of the containers or of the groups of containers, said means further comprising means for moving the different stations with respect to each other, means (58,62) for adjusting the movements of the plastic material take-up and displacement chains (18), and means for automatically synchronizing the tools equipping the stations as a function of the movement of the plastic material film take-up and displacement chains.
